# EUROPÄISCHE PATENTSCHRIFT

(11) **EP 2 683 551 B1**
(45) Veröffentlichungstag und Bekanntmachung des Hinweises auf die Patenterteilung: **12.07.2017**
(21) Anmeldenummer: 12707107.4
(22) Anmeldetag: 06.03.2012
(51) Int. Cl.: B32B 27/30, B44C 1/22, C25D 5/02, C08L 69/00

(54) **TRANSPARENTE, GALVANISIERBARE KUNSTSTOFF-FOLIE FÜR DAS PARTIELLE GALVANISIEREN**
TRANSPARENT PLASTIC FILM THAT CAN BE ELECTROPLATED FOR PARTIAL ELECTROPLATING
FEUILLE TRANSPARENTE EN MATIÈRE PLASTIQUE POUVANT ÊTRE TRAITÉE PAR ÉLECTRODÉPOSITION, DESTINÉE À ÊTRE PARTIELLEMENT TRAITÉE PAR ÉLECTRODÉPOSITION

(30) Priorität: 10.03.2011 EP 11157746
(43) Veröffentlichungstag der Anmeldung: 15.01.2014
(73) Patentinhaber: Covestro Deutschland AG, 51373 Leverkusen (DE)
(72) Erfinder: GRÖTSCH, Matthias, 97318 Kitzingen (DE); TZIOVARAS, Georgios, 42275 Wuppertal (DE); PUDLEINER, Heinz, 47800 Krefeld (DE); KÜNZEL, Roland, 51381 Leverkusen (DE)
(74) Vertreter: Levpat
(86) Internationale Anmeldenummer: PCT/EP2012/053809
(87) Internationale Veröffentlichungsnummer: WO 2012/120007

(56) Entgegenhaltungen:
- EP-A2- 1 048 748
- WO-A2-2004/099460
- DE-A1- 10 208 674
- DE-A1- 10 307 334
- DE-A1-102005 050 930
- DATABASE WPI Week 200935 Thomson Scientific, London, GB; AN 2009-J24612 XP002650176, & JP 2009 103884 A (GOYO SHIKO KK) 14. Mai 2009 (2009-05-14)
- DATABASE WPI Week 198546 Thomson Scientific, London, GB; AN 1985-287368 XP002676514, & JP 60 198226 A (MITSUI TOATSU CHEM INC) 7. Oktober 1985 (1985-10-07)
- DATABASE WPI Week 200901 Thomson Scientific, London, GB; AN 2009-A21232 XP002676515, & KR 2008 0035058 A (ESDWORK CO LTD) 23. April 2008 (2008-04-23)

## Beschreibung

Die vorliegende Erfindung betrifft ein Verfahren zur Herstellung einer galvanisierbaren Kunststoff-Folie mit einer Lichttransmission größer 50 %, insbesondere bevorzugt größer 80 % zur Herstellung von metallisierten Bauteilen, insbesondere partiell metallisierten Bauteilen.

Partiell metallisierte Kunststoffformteile mit hinterleuchtbaren Symbolen sind insbesondere für Bedienelemente beispielsweise für den Automobil-Innenbereich, aber auch für den Flugzeug-Innenbereich oder Schienenfahrzeug-Innenbereich zur besseren Bedienbarkeit bei Dunkelheit von großem Interesse.

Solche Kunststoffformteile werden heute vorzugsweise mittels partiellem Galvanisieren metallisiert.

Voraussetzung für eine gute Metallisierung von Kunststoffen ist eine ausreichende Haftung zwischen Metallschicht und Kunststoff. Das muss für jeden Kunststoff mit einer unterschiedlichen Vorbehandlung geschehen. Nicht jeder Kunststoff lässt sich mit einem vertretbaren Aufwand leitfähig machen, deshalb haben sich in der Praxis die ABS-Kunststoffe (Acrylnitril-Butadien-Styrol-Copolymerisate) sowie deren Blends mit Polycarbonat(en) durchgesetzt.

Diverse Verfahren zur partiellen Galvanisierung von Kunststoffbauteilen sind dem Fachmann bekannt. Lange Zeit ließen sich teilweise verchromte Kunststoffteile nur mittels 2-Komponenten-(2K)-Technik herstellen. Galvanisierbares Kunststoff-Material bildete dabei den Untergrund für die Glanzschicht, nicht galvanisierbares Granulat wurde dort eingesetzt, wo kein Metall haften sollte. Der Nachteil solcher Verfahren besteht darin, dass ein 2K-Werkzeug sowie eine Spritzgießmaschine mit zwei Aggregaten benötigt wird. Zudem lassen sich spritztechnisch gesehen chromfreie Partien oft nicht dort realisieren, wo man sie wünscht (vgl. Innovation, Magazin for KH-Partners, No. 15, June 2007, p. 1 - 3, Herausgeber: Kunststoff Helmbrechts AG.).

Im neueren Verfahren folioPlate^{®} wird eine galvanisierbare Folie verformt, gestanzt und mit nicht galvanisch beschichtbarem Kunststoff hinterspritzt. Im folgenden Galvanikbad lagert sich das Metall nur an der Folie ab, der restliche Teilekörper bleibt frei (vgl. Innovation, Magazin for KH-Partners, No. 15, June 2007, p. 1 - 3, Herausgeber: Kunststoff Helmbrechts AG.). Zwar können dabei 2K-Werkzeuge und aufwendige Maskiertechnik vermieden werden, jedoch ist eine Dekoration der freigelassenen Stellen des Bauteils, speziell mehrfarbig, nur aufwendig realisierbar. Ein weiteres Verfahren zur partiellen Galvanisierung von Kunststoffformteilen ist in DE 102 08 674 A1 beschrieben. Dabei werden Spritzgussformteile aus galvanisierbarem ABS oder ABS/PC-Blends partiell galvanisiert, wobei jedoch zunächst Bereiche auf der Rückseite zur Vermeidung der Metallisierung abgedeckt und die Abdeckung im Anschluss an den Galvanisierprozess wieder entfernt werden müssen. Weiterhin nachteilig an diesem Verfahren ist die schlechte Lichttransmission der verwendeten galvanisierbaren Kunststoffe, so dass zur Hinterleuchtung ein hoher Energieaufwand erforderlich ist. Auch eine Dekoration der freigelaserten bzw. freigeätzten Stellen des Bauteils, speziell mehrfarbig, ist nur aufwendig realisierbar.

DE 103 07 334 A1 offenbart ein Verfahren zur Herstellung eines Kunststoffformteils mittels Zweikomponentenspritzguss, bei eine galvanisierbare ABS-Schicht auf einen nichtgalvanisierbaren Polycarbonat Grundkörper aufgebracht wird. Nachteilig an diesem Verfahren ist aber zum Einen, dass mittels Zweikomponentenspritzguss in der Regel keine Schichten mit ausreichender Transparenz für beispielsweise mehrfarbige Hinterleuchtung hergestellt werden können. Zum Anderen ist bei einem solchen Verfahren für jede unterschiedliche Formgebung des metallisierbaren Kunststoffformteils die Ausfertigung eines separaten Spritzgusswerkzeuges erforderlich. Das Verfahren bietet keinerlei Flexibilität in der Formgestaltung.

WO 2004/099460 A2 offenbart ein Verfahren zur Herstellung von gegebenenfalls durchleuchtbarer, galvanisch veredelter Formkörper, bei dem auf einen fertigen transparenten Kunststoffformkörper eine opake oder eingefärbte Schicht eines Lackes enthaltend einen galvanisierbaren Kunststoff auflackiert wird. Als galvanisierbarer Kunststoff wird beispielsweise ABS genannt. Dieses Verfahren ist jedoch insoweit nachteilig, als zum Einen mit der Lackierung von Kunststoffen, die wie ABS nicht wasserlöslich sind, die Problematik der Entfernung organischer Lösungsmittel gelöst werden muss, was zu verfahrenstechnischem sowie Entsorgungsmehraufwand führt. Zum Anderen reduziert eine opake Lackschicht die Transparenz für die Durchleuchtung bzw. eine Färbung der lackierten Schicht eröffnet keine flexibel zu gestaltende Mehrfarbigkeit der zu hinterleuchtenden Stellen. Zudem weisen lackierte Oberflächen aufgrund ihrer Rauhigkeit einen mit dem bloßen Auge wahrnehmbaren sogenannten "Orangenhauteffekt" auf, der sich auf eine galvanisierte Metalloberfläche übertragen würde und bei Betrachter in keinem Fall den Eindruck einer glatten Metalloberfläche hervorrufen würde.

JP2009103884 A offenbart einen stanzbaren, abriebfehlerfesten Doppelschichtlinsenfilm.

Es bestand demnach weiterhin Bedarf an einer Möglichkeit, auf eine einfache Weise mittels Galvanisieren partiell metallisierte Kunststoffformteile herzustellen, die die vorangehenden Nachteile nicht zeigen.

Die Aufgabe, die der vorliegenden Erfindung zugrunde lag, bestand demnach darin, Materialien sowie ein Verfahren zur Herstellung von mittels Galvanisieren partiell metallisierter Kunststoffformteilen aufzufinden, die mit möglichst wenigen Verfahrensschritten eine solche Herstellung ermöglichen. Dabei soll eine gegebenenfalls auch mehrfarbige Dekoration der hinterleuchtbaren Stellen auf einfache Weise möglich sein und die Hinterleuchtung mit möglichst geringem Energieaufwand erfolgen können. Zudem soll dabei auf einfache Weise Flexibilität in der Formgebung der Formteile gegeben sein.

Die Erfindung ist durch die angefügten Ansprüche definiert.

Diese Aufgabe wird überraschend durch den Einsatz einer Kunststoff-Folie enthaltend
- wenigstens eine Schicht enthaltend wenigstens ein Polycarbonat und
- wenigstens eine Schicht enthaltend wenigstens ein Vinylpolymerisat,
worin dass die Schicht(en) A enthaltend Polycarbonat und die Schicht(en) B enthaltend wenigstens ein Vinylpolymerisat coextrudiert wurden und die Schicht enthaltend wenigstens ein Vinylpolymerisat eine Schichtdicke von 100 µm oder weniger und eine Oberflächenrauhigkeit (R3z-Wert) gemessen nach DIN EN ISO 4288 von weniger als 1 µm aufweist und die Kunststoff-Folie eine Transmission im sichtbaren Wellenlängenbereich von mehr als 50 % aufweist und die Gesamtdicke der Kunststoff-Folie 1000 µm oder weniger beträgt,
in einem Verfahren zur Metallisierung, bevorzugt mittels Galvanisieren, gelöst.

Die nach dem erfindungsgemäßen Verfahren hergestellte Kunststoff-Folie ist lediglich auf der Seite, welche die wenigstens ein Vinylpolymerisat enthaltende Schicht aufweist, mittels Galvanisieren metallisierbar, so dass ein aufwendiges voll- oder teilflächiges Abdecken der Rückseite nicht erforderlich ist. Zudem ist aufgrund der hohen Lichttransmission im sichtbaren Wellenlängenbereich eine Hinterleuchtung mit geringem Energieaufwand möglich. Da die Kunststoff-Folie vor der weiteren Verarbeitung auf bekannte Weise gegebenenfalls auch mehrfarbig auf der Seite der Polycarbonat enthaltenden Schicht bedruckt werden kann, ist auf einfache Weise auch die Möglichkeit von ein- oder mehrfarbiger Dekoration der hinterleuchteten Bereiche gegeben. Zudem ist die Kunststofffolie mittels bekannter Verformungsverfahren verformbar, weshalb daraus Formteile mit unterschiedlichster Form hergestellt werden können.

Gegenstand der vorliegenden Erfindung ist demnach die Verwendung einer Kunststoff-Folie enthaltend
- wenigstens eine Schicht A enthaltend wenigstens ein Polycarbonat und
- wenigstens eine Schicht B enthaltend wenigstens ein Vinylpolymerisat,

dadurch gekennzeichnet, dass die Schicht(en) A enthaltend Polycarbonat und die Schicht(en) B enthaltend wenigstens ein Vinylpolymerisat coextrudiert wurden und die Schicht B enthaltend wenigstens ein Vinylpolymerisat eine Schichtdicke von 100 µm oder weniger und eine Oberflächenrauhigkeit (R3z-Wert) gemessen nach DIN EN ISO 4288 von weniger als 1 µm aufweist und die Kunststoff-Folie eine Transmission im sichtbaren Wellenlängenbereich von mehr als 50 % aufweist und die Gesamtdicke der Kunststoff-Folie 1000 µm oder weniger beträgt,
für die Herstellung metallisierter Bauteile, wobei die Metallisierung bevorzugt mittels Galvanisieren erfolgt.

Bevorzugt eignet sich die Kunststoff-Folie für die Herstellung partiell metallisierter Bauteile, wobei die Metallisierung mittels partiellem Galvanisieren erfolgt.

Ebenfalls offenbart ist die galvanisierbare Kunststoff-Folie enthaltend
- wenigstens eine Schicht A enthaltend wenigstens ein Polycarbonat und
- wenigstens eine Schicht B enthaltend wenigstens ein Vinylpolymerisat,
dadurch gekennzeichnet, dass die Schicht(en) A enthaltend Polycarbonat und die Schicht(en) B enthaltend wenigstens ein Vinylpolymerisat coextrudiert wurden und die Schicht B enthaltend wenigstens ein Vinylpolymerisat eine Schichtdicke von 100 µm oder weniger aufweist und die Kunststoff-Folie eine Transmission im sichtbaren Wellenlängenbereich von mehr als 50 % aufweist. Die Gesamtdicke der unststoff-Folie beträgt 1000 µm oder weniger, besonders bevorzugt 750 µm oder weniger, ganz besonders bevorzugt 600 µm oder weniger.

In bevorzugten Ausführungsformen befinden sich zwischen der Schicht A und B keine weiteren Schichten.

In einer ganz besonders bevorzugten Ausführungsform enthält die Kunststofffolie eine Schicht A und eine Schicht B. Vorzugsweise kann die Schicht B auf der nicht in Kontakt mit der Schicht A befindlichen Seite bedruckt sein.

Bei der Folie kann es in bevorzugten Ausführungsformen aber auch um einen Mehrschichtaufbau handeln, der mehr als eine Schicht A und/oder B enthält. Eine bevorzugte Ausführungsform ist ein solcher Mehrschichtaufbau, bei dem sich wenigstens eine Schicht A zwischen wenigstens zwei, bevorzugt zwei Schichten B befindet. Bei der Folie kann es in bevorzugten Ausführungsformen aber auch um einen Mehrschichtaufbau handeln, der zwischen der oder den Schicht(en) A und B noch weitere Schichten aufweist. Bei der erfindungsgemäßen Folie kann es in bevorzugten Ausführungsformen aber auch um einen Mehrschichtaufbau handeln, der zwischen der oder den Schicht(en) A und B und oder auf der Schicht A nach außen hin gerichtet noch weitere Schichten aufweist.

Erfindungsgemäß geeignete Polycarbonate für die Schicht(en) A sind alle bekannten Polycarbonate. Dies können beispielsweise und bevorzugt Homopolycarbonate, Copolycarbonate und thermoplastische Polyestercarbonate sein.

Vorzugsweise weisen die Polycarbonate mittlere Molekulargewichte M̅_{w} von 10.000 bis 100.000, bevorzugt von 15.000 bis 50.000, besonders bevorzugt von 20.000 bis 40.000 und ganz besonders bevorzugt von 24.000 bis 35.000, ermittelt durch Messung der relativen Lösungsviskosität bei 25 °C in Dichlormethan oder in Mischungen gleicher Gewichtsmengen Phenol/o-Dichlorbenzol geeicht durch Lichtstreuung, auf.

Die Herstellung von Polycarbonaten ist dem Fachmann bekannt. Hierzu sei beispielhaft auf "Schnell, Chemistry and Physics of Polycarbonats, Polymer Reviews, Vol. 9, Interscience Publishers, New York, London, Sydney 1964", und auf "D.C. PREVORSEK, B.T. DEBONA and Y. KESTEN, Corporate Research Center, Allied Chemical Corporation, Moristown, New Jersey 07960, 'Synthesis of Poly(ester)carbonate Copolymers' in Journal of Polymer Science, Polymer Chemistry Edition, Vol. 19, 75-90 (1980)", und auf "D. Freitag, U. Grigo, P.R. Müller, N. Nouvertne, BAYER AG, 'Polycarbonates' in Encyclopedia of Polymer Science and Engineering, Vol. 11, Second Edition, 1988, Seiten 648-718" und schließlich auf "Dres. U. Grigo, K. Kircher und P.R. Müller 'Polycarbonate' in Becker/Braun, Kunststoff-Handbuch, Band 3/1, Polycarbonate, Polyacetale, Polyester, Celluloseester, Carl Hanser Verlag München, Wien 1992, Seiten 117-299" verwiesen.

Für die Herstellung von erfindungsgemäß bevorzugter Polycarbonate geeignete Dihydroxyarylverbindungen sind solche der allgemeinen Formel (1)

HO-Z-OH (1)

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in der allgemeinen Formel (1) für einen Rest der allgemeinen Formel (1a) 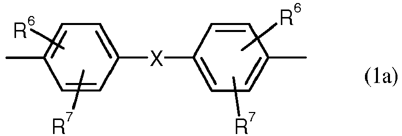 in der
- R⁶ und R⁷: unabhängig voneinander für H, C₁-C₁₈-Alkyl-, C₁-C₁₈-Alkoxy, Halogen wie z.B. Cl oder Br oder für jeweils gegebenenfalls substituiertes Aryl- oder Aralkyl, bevorzugt für H oder C₁-C₁₂-Alkyl, besonders bevorzugt für H oder C₁-C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆- Cycloalkyliden, welches mit C₁- bis C₆-Alkyl, vorzugsweise Methyl oder Ethyl substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁ bis C₅-Alkylen, C₂ bis C₅-Alkyliden, C₅ bis C₆-Cycloalkyliden, -O-, -SO-, -CO-, -S-, -SO₂-,
oder ein für einen Rest der allgemeinen Formel (1b) oder (1c) 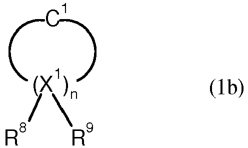 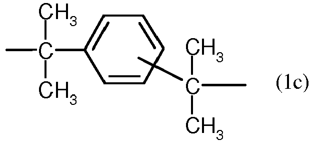 wobei
- R⁸ und R⁹: für jedes X¹ individuell wählbar, unabhängig voneinander Wasserstoff oder C₁ bis C₆-Alkyl, vorzugsweise Wasserstoff, Methyl oder Ethyl bedeuten und
- X¹: für Kohlenstoff steht und
- n: für eine ganze Zahl von 4 bis 7, bevorzugt 4 oder 5 steht, mit der Maßgabe, dass an mindestens einem Atom X¹, R⁸ und R⁹ gleichzeitig Alkyl sind.

Beispiele solcher Dihydroxyarylverbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)sulfone, Bis(hydroxyphenyl)ketone und α,α'-Bis(hydroxyphenyl)-diisopropylbenzole gehören.

Besonders bevorzugte Bisphenole, die zu den vorgenannten Verbindungsgruppen gehören, sind 2,2-Bis-(4-hydroxyphenyl)-propan (Bisphenol-A), Tetraalkylbisphenol-A, 4,4-(meta-Phenylendiisopropyl)diphenol (Bisphenol M), 4,4-(para-Phenylendiisopropyl)diphenol, N-Phenyl-Isatinbisphenol, 1,1-Bis-(4-hydroxyphenyl)-3,3,5-trimethylcyclohexan, Bisphenole vom Typ der 2-Hydrocarbyl-3,3-bis(4-hydroxyaryl)phthalimidine, insbesondere 2-Phenyl-3,3-bis(4-hydroxyphenyl)phthalimidin, sowie gegebenenfalls deren Gemische.

Ganz besonders bevorzugte Bisphenole, die zu den vorgenannten Verbindungsgruppen gehören, sind 2,2-Bis-(4-hydroxyphenyl)-propan (Bisphenol-A), Tetraalkylbisphenol-A, 4,4-(meta-Phenylendiisopropyl) diphenol (Bisphenol M), 4,4-(para-Phenylendiisopropyl) diphenol, 1,1-Bis-(4-hydroxyphenyl)-3,3,5-trimethylcyclohexan (BP-TMC) sowie gegebenenfalls deren Gemische.

Besonders bevorzugt sind Homopolycarbonate auf Basis von 2,2-Bis-(4-hydroxyphenyl)-propan (Bisphenol-A) oder 1,1-Bis-(4-hydroxyphenyl)-3,3,5-trimethylcyclohexan und Copolycarbonate auf der Basis der Monomere 2,2-Bis-(4-hydroxyphenyl)-propan (Bisphenol-A) und 1,1-Bis-(4-hydroxyphenyl)-3,3,5-trimethylcyclohexan.

Für die Herstellung von erfindungsgemäß bevorzugter Polycarbonate werden die Dihydroxyarylverbindungen mit Kohlensäurederivaten umgesetzt.

Geeignete Kohlensäurederivate sind beispielsweise Phosgen oder Diarylverbindungen ausgewählt aus der Gruppe Diphenylcarbonat, Dimethylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat.

Besonders bevorzugte Kohlensäurederivate sind Phosgen oder beim Schmelzeumesterungsprozess Diphenylcarbonat oder Dimethylcarbonat.

Polyestercarbonate werden bevorzugt durch Umsetzung der bereits genannten Dihydroxyarylverbindungen, mindestens einer aromatischen Dicarbonsäure und gegebenenfalls wenigstens einem Kohlensäurederivat erhalten. Geeignete aromatische Dicarbonsäuren sind beispielsweise Phthalsäure, Terephthalsäure, Isophthalsäure, 3,3'- oder 4,4'-Diphenyldicarbonsäure und Benzophenondicarbonsäuren. Ein Teil, bevorzugt bis zu 80 Mol.-%, besonders bevorzugt 20 bis 50 Mol-% der Carbonatgruppen in den Polycarbonaten können durch aromatische Dicarbonsäureester-Gruppen ersetzt sein.

Die Polycarbonate können durch den Einsatz geringer Mengen Verzweiger bewusst und kontrolliert verzweigt werden. Geeignete Verzweiger sind beispielsweise: Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α,α,'α"-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere: 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Dihydroxyarylverbindungen, an Verzweigern bzw. Mischungen der Verzweigern, können mit den Dihydroxyarylverbindungen zusammen eingesetzt oder in einem späteren Stadium der Synthese zugegeben werden.

Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet. Bevorzugt erfolgt der Einsatz in Mengen von 1 bis 20 Mol-%, bevorzugt von 2 bis 10 Mol-% je Mol Dihydroxyarylverbindung. Bevorzugte Kettenabbrecher sind Phenol, 4-tert.-Butylphenol oder Cumylphenol.

Kettenabbrecher und Verzweiger können getrennt oder aber auch zusammen mit den Dihydroxyarylverbindungen den Synthesen zugesetzt werden.

Erfindungsgemäß bevorzugte Polycarbonate für die Schicht A sind das Homopolycarbonat auf Basis von 2,2-Bis-(4-hydroxyphenyl)-propan (Bisphenol-A), das Homopolycarbonat auf Basis von 1,1-Bis-(4-hydroxyphenyl)-3,3,5-trimethylcyclohexan und die Copolycarbonate auf Basis der beiden Monomere 2,2-Bis-(4-hydroxyphenyl)-propan (Bisphenol-A) und 1,1-Bis-(4-hydroxyphenyl)-3,3,5-trimethylcyclohexan. Das Homopolycarbonat auf Basis von 2,2-Bis-(4-hydroxyphenyl)-propan (Bisphenol-A) ist besonders bevorzugt.

Das Polycarbonat kann zudem Stabilisatoren enthalten. Geeignete Stabilisatoren sind beispielsweise Phosphine, Phosphite oder Si enthaltende Stabilisatoren sowie weitere in EP-A 0 500 496 beschriebene Verbindungen. Beispielhaft seien Triphenylphosphite, Diphenylalkylphosphite, Phenyldialkylphosphite, Tris-(nonylphenyl)phosphit, Tetrakis-(2,4-di-tert.-butylphenyl)-4,4'-biphenylen-diphosponit und Triarylphosphit genannt. Besonders bevorzugt sind Triphenylphosphin und Tris-(2,4-di-tert.-butylphenyl)phosphit.

Ferner kann die Schicht A der erfindungsgemäßen mehrschichtigen Erzeugnisses 0,01 bis 0,5 Gew.-% der Ester oder Teilester von ein- bis sechswertigen Alkoholen, insbesondere des Glycerins, des Pentaerythrits oder von Guerbetalkoholen enthalten.

Einwertige Alkohole sind beispielsweise Stearylalkohol, Palmitylalkohol und Guerbetalkohole. Ein zweiwertiger Alkohol ist beispielsweise Glycol. Ein dreiwertiger Alkohol ist beispielsweise Glycerin. Vierwertige Alkohole sind beispielsweise Pentaerythrit und Mesoerythrit. Fünfwertige Alkohole sind beispielsweise Arabit, Ribit und Xylit. Sechswertige Alkohole sind beispielsweise Mannit, Glucit (Sorbit) und Dulcit.

Die Ester sind bevorzugt die Monoester, Diester, Triester, Tetraester, Pentaester und Hexaester oder deren Mischungen, insbesondere statistische Mischungen, aus gesättigten, aliphatischen C₁₀ bis C₃₆-Monocarbonsäuren und gegebenenfalls Hydroxy-Monocarbonsäuren, vorzugsweise mit gesättigten, aliphatischen C₁₄ bis C₃₂-Monocarbonsäuren und gegebenenfalls Hydroxy-Monocarbonsäuren.

Die kommerziell erhältlichen Fettsäureester, insbesondere des Pentaerythrits und des Glycerins, können herstellungsbedingt <60 % unterschiedlicher Teilester enthalten.

Gesättigte, aliphatische Monocarbonsäuren mit 10 bis 36 C-Atomen sind beispielsweise Caprinsäure, Laurinsäure, Myristinsäure, Palmitinsäure, Stearinsäure, Hydroxystearinsäure, Arachinsäure, Behensäure, Lignocerinsäure, Cerotinsäure und Montansäuren. Bevorzugte gesättigte, aliphatische Monocarbonsäuren mit 14 bis 22 C-Atomen sind beispielsweise Myristinsäure, Palmitinsäure, Stearinsäure, Hydroxystearinsäure, Arachinsäure und Behensäure. Besonders bevorzugt sind gesättigte, aliphatische Monocarbonsäuren wie Palmitinsäure, Stearinsäure und Hydroxystearinsäure.

Die gesättigten, aliphatischen C₁₀ bis C₃₆-Carbonsäuren und die Fettsäureester sind als solche entweder literaturbekannt oder nach literaturbekannten Verfahren herstellbar. Beispiele für Pentaerythritfettsäureester sind die der besonders bevorzugten, vorstehend genannten Monocarbonsäuren.

Besonders bevorzugt sind Ester des Pentaerythrits und des Glycerins mit Stearinsäure und Palmitinsäure. Besonders bevorzugt sind auch Ester von Guerbetalkoholen und des Glycerins mit Stearinsäure und Palmitinsäure und gegebenenfalls Hydroxystearinsäure.

Die Polycarbonate können zudem organische Farbstoffe, anorganische Farbpigmente, Fluoreszenzfarbstoffe und/oder optische Aufheller, bevorzugt Fluoreszenzfarbstoffe und/oder organische Farbstoffe enthalten.

Die Schicht A enthält erfindungsgemäß kein galvanisierbares Vinylpolymerisat, vorzugsweise kein Acrylnitril-Butadien-Styrol-Copolymerisat (ABS).

In besonders bevorzugten Ausführungsformen besteht die Schicht A aus einer Kunststoffzusammensetzung enthaltend mindestens 80 Gew.-%, besonders bevorzugt mindestens 90 Gew.-% - bezogen auf das Gesamtgewicht der Kunststoffzusammensetzung - wenigstens eines Polycarbonats oder eines Blends enthaltend Polycarbonat. Erfindungsgemäß bevorzugt weist der Blend jedoch kein galvanisierbares, d.h. mittels Galvanisierung metallisierbares, Vinylpolymerisat, vorzugsweise kein Acrylnitril-Butadien-Styrol-Copolymerisat (ABS) auf.

Besonders bevorzugte Blends enthaltend Polycarbonat sind solche enthaltend Polycarbonat und wenigstens ein Poly- oder Copolykondensat der Terephthalsäure, wie beispielhaft und vorzugsweise Poly- oder Copolyethylenterephthalat (PET oder CoPET), glycol-modifiziertes PET (PETG) oder Poly- oder Copolybutylenterephthalat (PBT oder CoPBT) oder Poly- oder Copolyethylennaphthalat (PEN oder CoPEN).

Bei den Vinylpolymerisaten handelt es sich erfindungsgemäß um galvanisierbare, d.h. mittels Galvanisierung metallisierbare, Kunststoffe.

Erfindungsgemäß sind dies bevorzugt solche Polymerisate aus einem oder mehreren, bevorzugt mindestens zwei ethylenisch ungesättigten Monomeren ausgewählt aus Ethylen, Propylen, Vinylacetat, Styrol, α-Methylstyrol, o-, und/oder m-, und/oder p-substituierte Styrole, Acrylnitril, Methacrylnitril, Methylmethacrylat, Maleinsäureanhydrid, N-substituierte-Maleinimide, Chloropren, Butadien-1,3, Isopropen, C₁-C₁₈-Alkylacrylate und C₁-C₁₈-Alkylmethacrylate.

Besonders bevorzugt kommen als Vinylpolymerisate in Frage:
- kautschukfreie Vinylpolymerisate (A.1)
- kautschukhaltige Vinylpolymerisate, z.B. Pfropfcopolymerisate von Vinylmonomeren auf einen Kautschuk (A.2)
- Mischungen aus kautschukfreien (A.1) und kautschukhaltigen (A.2) Vinylpolymerisaten.

Bevorzugte Vinylpolymerisate A.1 sind Copolymerisate aus einerseits Styrol, α-Methylstyrol, ortho-, und/oder meta-, und/oder para-substituiertem Styrol oder Mischungen dieser Monomere (A.1.1) und andererseits Acrylnitril, Methacrylnitril, Methylmethacrylat, Maleinsäureanhydrid, N-substituiertes Maleinimid oder Mischungen dieser Monomere (A.1.2).

Bevorzugt enthalten diese Copolymerisate 50 bis 98 Gew.-% A.1.1 und 50 bis 2 Gew.-% A.1.2.

Besonders bevorzugte Copolymerisate A.1 sind solche aus Styrol, Acrylnitril und gegebenenfalls Methylmethacrylat, aus α-Methylstyrol, Acrylnitril und gegebenenfalls Methylmethacrylat sowie aus Styrol, α-Methylstyrol, Acrylnitril und gegebenenfalls Methylmethacrylat.

Die bekanntesten sind Styrol-Acrylnitril-Copolymerisate, die durch radikalische Polymerisation, insbesondere durch Emulsions-, Suspensions-, Lösungs- oder Massepolymerisation hergestellt werden können. Die Copolymerisate A.1 besitzen vorzugsweise Molekulargewichte M_{w} (Gewichtsmittel, ermittelt durch Lichtstreuung oder Sedimentation) von 15 000 bis 200 000.

Weitere besonders bevorzugte Copolymerisate A.1 sind statistisch aufgebaute Copolymerisate aus Styrol und Maleinsäureanhydrid, die z.B. durch eine kontinuierliche Masse- oder Lösungspolymerisation bei unvollständigen Umsätzen aus dem entsprechenden Monomeren hergestellt werden können. Ihre Zusammensetzung kann innerhalb weiter Grenzen variiert werden. Bevorzugt enthalten sie 5 bis 25 Gew.-% an Wiederholungseinheiten abgeleitet von Maleinsäureanhydrid.

Anstelle von Styrol können diese Polymerisate auch o-, und/oder m-, und/oder p-substituierte Styrole, wie p-Methylstyrol, Vinyltoluol, 2,4-Dimethylstyrol und andere substituierte Styrole, wie α-Methylstyrol, enthalten.

Die kautschukhaltigen Vinylpolymerisate A.2 umfassen z.B. Pfropfcopolymerisate mit kautschukelastischen Eigenschaften, die im wesentlichen aus mindestens zwei, bevorzugt mindestens drei der folgenden Monomeren erhältlich sind: Chloropren, Butadien-1,3, Isopropen, Styrol, Acrylnitril, Ethylen, Propylen, Vinylacetat, C₁-C₁₈-Alkylacrylate und C₁-C₁₈-Alkylmethacrylate. Solche Polymerisate sind in "Methoden der Organischen Chemie" (Houben-Weyl), Bd. 14/1, Georg Thieme-Verlag, Stuttgart, 1961, Seite 393-406 und in C.B. Bucknall, "Toughened Plastics", Appl. Science Publishers, London 1977, Seite 66 bis 106 beschrieben. Bevorzugte Polymerisate A.2 sind partiell vernetzt und besitzen Gelgehalte von über 20 Gew.-%, vorzugsweise über 40 Gew.-%, insbesondere über 60 Gew.-% (gemessen in Toluol).

Bevorzugte kautschuhaltige Vinylpolymerisate A.2 sind Pfropfcopolymerisate aus:
- A.2.1: 5 bis 95, vorzugsweise 30 bis 80 Gew.-Teilen, einer Mischung aus
A.2.1.1 50 bis 95 Gew.-Teilen Styrol, α-Methylstyrol, ortho-, meta-, und/oder para- oder Halogenstyrol, oder ortho-, meta-, und/oder para-Methylstyrolen, Methylmethacrylat oder Mischungen dieser Verbindungen und
A.2.1.2 5 bis 50 Gew.-Teilen Acrylnitril, Methacrylnitril, Methylmethacrylat, Maleinsäuranhydrid, C₁-C₄-alkyl- bzw. phenyl-N-substituierten Maleinimiden oder Mischungen dieser Verbindungen auf
- A.2.2: 5 bis 95, vorzugsweise 20 bis 70 Gew.-Teile Kautschuk-Polymerisat mit einer Glasübergangstemperatur unter -10°C.

Besonders bevorzugte Pfropfcopolymerisate A.2 sind z.B. mit Styrol und/oder Acrylnitril und/oder Alkylacrylaten oder Alkylmethacrylaten gepfropfte Polybutadiene, Butadien/Styrol-Copolymerisate und Acrylatkautschuke, bevorzugt mit Styrol und Acrylnitril sowie gegebenenfalls zusätzlich Alkylacrylaten oder Alkylmethacrylaten gepfropfte Polybutadiene, Butadien/Styrol-Copolymerisate; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie in DE-A 2 348 377, Seite 4, Zeile 14 bis Seite 5, Zeile 2, beschrieben sind, bevorzugt mit Styrol und Acrylnitril sowie gegebenenfalls zusätzlich mit Acryl- oder Methacrylsäurealkylestern, Vinylacetat und/oder Alkylstyrolen gepfropfte Polybutadiene, Butadien/Styrol- oder Butadien/Acrylnitril-Copolymerisate.

Ganz besonders bevorzugte kautschuhaltige Vinylpolymerisate A.2 sind Acrylnitril-Butadien-Styrol-Copolymerisate (ABS-Copolymerisate).

Besonders bevorzugte Pfropfcopolymerisate A.2 sind erhältlich durch Pfropfpolymerisation von
α. 10 bis 70, vorzugsweise 15 bis 50, insbesondere 20 bis 40 Gew.-% - bezogen auf das Pfropfcopolymerisat A.2 - von Acrylsäureestern oder Methacrylsäureestem oder von 10 bis 70, vorzugsweise 15 bis 50, insbesondere 20 bis 40 Gew.-% eines Gemisches aus 10 bis 50, vorzugsweise 20 bis 35 Gew.-% Acrylnitril, Acrylsäureester oder Methacrylsäureester, besonders bevorzugt Acrylnitril, und 50 bis 90, vorzugsweise 65 bis 80 Gew.-% Styrol - Gew.-%-Angaben bezogen auf das Gesamtgewicht des Gemisches aus Acrylnitril, Acrylsäureester oder Methacrylsäureester und Styrol - (als Pfropfauflage A.2.1) auf
β. 30 bis 90, vorzugsweise 50 bis 85, insbesondere 60 bis 80 Gew.-% - bezogen auf Pfropfpolymerisat A.2 - eines Butadien-Polymerisats mit mindestens 50 Gew.-%, bezogen auf ß, Butadienresten (als Pfropfgrundlage A.2.2),
   wobei vorzugsweise der Gelanteil der Pfropfgrundlage ß mindestens 40 Gew.-% (gemessen in Toluol), der Pfropfgrad G 0,15 bis 0,55 und der mittlere Teilchendurchmesser d50 des Pfropfpolymerisats A.2 0,05 bis 2 µm, vorzugsweise 0,1 bis 0,6 µm beträgt.

Acrylsäureester bzw. Methacrylsäureester α sind Ester der Acrylsäure oder Methacrylsäure und einwertiger Alkohole mit 1 bis 18 C-Atomen. Besonders bevorzugt sind Methylmethacrylat, Ethylmethacrylat, Propylmethacrylat, n-Butylacrylat t-Butylacrylat und t-Butylmethacrylat.

Das Butadienpolymerisat ß kann neben Butadienresten bis zu 50 Gew.-%, bezogen auf ß, Reste anderer ethylenisch ungesättigter Monomerer, wie Styrol, Acrylnitril, C₁-C₄-Alkylester oder Acryl- oder Methyacrylsäure (wie Methylacrylat, Ethylacrylat, Methylmethacrylat, Ethylmethacrylat), Vinylester und/oder Vinylether) enthalten. Bevorzugt ist Polybutadien.

Bei der Pfropfpolymerisation werden die Pfropfmonomeren bekanntlich nicht vollständig auf die Pfropfgrundlage polymerisiert; schließen Pfropfpolymerisate A.2 aber Produkte ein, die durch Polymerisation der Pfropfmonomere in Gegenwart der Pfropfgrundlage gewonnen werden.

Der Pfropfgrad G ist das Gewichtsverhältnis von aufgepfropften Pfropfmomomeren zur Pfropfgrundlage (Dimensionslose Zahl).

Der mittlere Teilchendurchmesser d₅₀ ist der Durchmesser, unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), Seiten 782 bis 796) bestimmt werden.

Weitere besonders bevorzugte kautschukhaltige Vinylpolymerisate A.2 sind Pfropfcopolymerisate aus
τ. 20 bis 90 Gew.-%, bezogen auf A.2, Acrylatkautschuk mit einer Glasübergangstemperatur Tg unter -20°C als Pfropfgrundlage A.2.2 und
ε. 10 bis 80 Gew.-%, bezogen auf A.2, mindestens eines polymerisierbaren, ethylenisch ungesättigten Monomeren, dessen bzw. deren in Abwesenheit von A.2.2. entstandenen Homo- bzw. Copolymerisate eine Glasübergangstemperatur Tg von mehr als 25°C hätten, als Pfropfmonomere A.2.1.

Die Glasübergangstemperatur T_{g} kann mittels dynamischer Differenzkalorimetrie (DSC) gemäß der Norm ISO 113557-2 bei einer Heizrate von 10 K/min mit Definition der Tg als Mittelpunkttemperatur (Tangentenmethode) bestimmt.

Die Acrylatkautschuke τ der Polymerisate A.2 sind vorzugsweise Polymerisate aus Acrylsäurealkylestem, gegebenenfalls mit bis zu 40 Gew.-%, bezogen auf τ, anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethyl-hexylester; Halogenalkylester, vorzugsweise Halogen-C₁-C₈-alkyl-ester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat- polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-striazin, Triallylbenzole.

Die Menge der vernetzenden Monomeren beträgt vorzugsweise 0,02 bis 5, insbesondere 0,05 bis 2 Gew.-%, bezogen auf die Pfropfgrundlage τ.

Bei cyclischen vernetzenden Monomeren mit mindestens drei ethylenisch ungesättigten Gruppen ist es vorteilhaft, die Menge auf unter 1 Gew.-% der Pfropfgrundlage τ zu beschränken.

Bevorzugte "andere" polymerisierbare, ethylenisch ungesättigte Monomere, die neben den Acrylsäureestern gegebenenfalls zur Herstellung der Pfropfgrundlage dienen können, sind Acrylnitril, Styrol, α-Methylstyrol, Acrylamide, Vinyl-C₁-C₆-Alkylether, Methylmethacrylat, Butadien. Bevorzugte Acrylatkautschuke als Pfropfgrundlage τ sind Emulsionspolymerisate, die einen Gelgehalt von mindestens 60 Gew.-% aufweisen.

Weitere geeignete Pfropfgrundlagen gemäß A.2.2 sind Silikonkautschuke mit pfropfaktiven Stellen, wie sie in DE-A 37 04 657, Spalte 5, Zeile 21 bis Spalte 6, Zeile 52; DE-A 37 04 655 Spalte 5, Zeile 24 bis Spalte 6, Zeile 65; DE-A 36 31540, Seite 6, Zeile 65 bis Seite 7, Zeile 45;und DE-A 36 31 539, Seite 6, Zeile 54 bis Seite 7, Zeile 35 beschrieben werden.

Der Gelgehalt der Pfropfgrundlage A.2.2 wird bei 25°C in Dimethylformamid bestimmt (M. Hoffmann, H. Krömer, R. Kuhn, Polymeranalytik 1 und II, Georg-Thieme-Verlag, Stuttgart 1977).

Die Pfropfpolymerisate A.2 können nach bekannten Verfahren wie Masse-, Suspensions-, Emulsions- oder Masse-Suspensionsverfahren hergestellt werden.

In besonders bevorzugten Ausführungsformen besteht die Schicht B aus einer Kunststoffzusammensetzung enthaltend mindestens 80 Gew.-%, besonders bevorzugt mindestens 90 Gew.-% - bezogen auf das Gesamtgewicht der Kunststoffzusammensetzung - eines oder mehrerer der vorangehend aufgeführten Vinylpolymerisate oder mindestens 80 Gew.-%, besonders bevorzugt mindestens 90 Gew.-% eines Blends eines oder mehrerer der vorangehend aufgeführten Vinylpolymerisate mit einem oder mehreren Polycarbonaten. Insbesondere bevorzugt besteht die Schicht B aus einer Kunststoffzusammensetzung enthaltend mindestens 80 Gew.-%, besonders bevorzugt mindestens 90 Gew.-% eines oder mehrerer Acrylnitril-Butadien-Styrol-Copolymerisate (ABS-Copolymerisate) oder mindestens 80 Gew.-%, besonders bevorzugt mindestens 90 Gew.-% eines Blends eines oder mehrerer Acrylnitril-Butadien-Styrol-Copolymerisate (ABS-Copolymerisate) mit einem oder mehreren Polycarbonaten.

Als geeignete Polycarbonate oder Copolycarbonate für derartige Blend kommen bevorzugt die vorangehend für die Schicht A genannten in Frage. Erfindungsgemäß bevorzugte Polycarbonate für die Schicht B - sofern letztgenannte einen Blend aus wenigstens einem Vinylpolymerisat und wenigstens einem Polycarbonat enthält - sind das Homopolycarbonat auf Basis von 2,2-Bis-(4-hydroxyphenyl)-propan (Bisphenol-A), das Homopolycarbonat auf Basis von 1,1-Bis-(4-hydroxyphenyl)-3,3,5-trimethylcyclohexan und die Copolycarbonate auf Basis der beiden Monomere 2,2-Bis-(4-hydroxyphenyl)-propan (Bisphenol-A) und 1,1-Bis-(4-hydroxyphenyl)-3,3,5-trimethylcyclohexan. Das Homopolycarbonat auf Basis von 2,2-Bis-(4-hydroxyphenyl)-propan (Bisphenol-A) ist besonders bevorzugt.

Bevorzugt weist bzw. weisen die Schicht(en) B insgesamt eine Schichtdicke von 70 µm oder weniger, bevorzugt von 50 µm oder weniger, besonders bevorzugt von 30 µm oder weniger auf. Besonders bevorzugt enthält die Kunststoff-Folie nur eine Schicht B enthaltend wenigstens ein Vinylpolymerisat.

Durch die geringe Schichtdicke der Schicht(en) B wird die Lichtransmission der Kunststoff-Folie gegenüber Formkörpern aus ABS oder ABS/Polycarbonat-Blends erheblich verbessert, so dass eine Hinterleuchtung bereits mit relativ schwachen Lichtquellen, wie z.B. LEDs, energiesparend realisiert werden kann.

Vorzugsweise weist die Kunststoff-Folie eine Transmission im sichtbaren Wellenlängenbereich von mehr als 70 %, bevorzugt von mehr als 80 % auf. Der sichtbare Wellenlängenbereich des Lichtes erstreckt sich über den Wellenlängenbereich von 380 bis 780 nm.

Für bestimmte Anwendungen kann es vorteilhaft und bevorzugt sein, dass die Kunststoff-Folie zusätzlich zu der guten Transmission im sichtbaren Wellenlängenbereich eine geringe Trübung aufweist durchtretende Licht nur geringfügig streut. Demnach kann es vorteilhaft und bevorzugt sein, dass die Kunststoff-Folie zusätzlich zu der guten Transmission im sichtbaren Wellenlängenbereich einen niedrigen Haze aufweist, welcher vorzugsweise kleiner als 20, besonders bevorzugt kleiner als 13, ganz besonders bevorzugt kleiner als 10 ist.

Bei der Kunststoff-Folie handelt es sich bevorzugt um eine solche, die mittels Co-Extrusion der Schicht(en) A und der Schicht(en) B sowie gegebenenfalls weiterer Schichten zwischen diesen Schichten A und B hergestellt wurde. Dadurch lassen sich vorteilhafterweise insbesondere bevorzugt besonders dünne Schichten B realisieren.

Oberfläche der Schicht B der Kunststofffolie besitzt eine Oberflächenrauhigkeit (R3z-Wert) von weniger als 1 µm, bevorzugt von weniger als 0,5 µm auf. Die Oberflächenrauhigkeit kann nach DIN EN ISO 4287 mit einem Hommel T1000 gemessen werden. Insbesondere, wenn mittels Galvanisieren besonders dünne und hochglänzende Metallschichten aufgebracht werden sollen, ist eine solche bevorzugte Oberflächenrauhigkeit von Vorteil, da diese den Glanzeffekt der Metallschicht nicht durch optisch wahrnehmbare Unebenheiten oder Streueffekte beeinträchtigt.

Die Kunststoff-Folie eignet sich zur Herstellung metallisierter, insbesondere partiell metallisierter Kunststoffformteile, bevorzugt von hinterleuchtbaren Kunststoffformteilen. Derartige Kunststoffformteile können insbesondere für Anwendungen im Automobil-Innenbereich, Flugzeug-Innenbereich, Schienenfahrzeug-Innenbereich, Haushaltsbereich, Computerbereich sowie Elektronikbereich zum Einsatz kommen. Beispielsweise sind geeignete Anwendungsgebiete Bedien-, Dekor- oder Anzeigeelemente, beispielsweise mit hinterleuchteten Symbolen, Rahmen, Tasten etc..

Die Kunststoff-Folie lässt sich mittels Galvanisieren derart metallisieren, dass die Abscheidung des Metalls vorteilhafterweise nur auf Schicht B erfolgt. Daher kann bei der Metallisierung der Folie mittels galvanisieren darauf verzichtet werden, die Rückseite der Folie voll- oder teilflächig abzudecken, um eine Metallabscheidung zu verhindern.
Bei der Herstellung metallisierter, insbesondere partiell metallisierter Kunststoffformteile kann die Metallisierung erfindungsgemäß derart erfolgen, dass zunächst die gegebenenfalls verformte Folie mittels Galvanisieren metallisiert, bevorzugt partiell metallisiert wird und anschließend das Formteil durch Hinterspritzen der Folie mit einem thermoplastischen Kunststoff erfolgt. Es kann aber auch alternativ zunächst das fertige nicht metallisierte Formteil hergestellt werden, indem die erfindungsgemäße Kunststoff-Folie verformt und mit einem nicht thermoplastischen Kunststoff hinterspritzt wird und anschließend erst die Metallisierung, bevorzugt partielle Metallisierung mittels Galvanisieren erfolgt. Die Kunststoff-Folie kann dabei - vorzugsweise vor dem Verformen - auf der Seite der Schicht A bedruckt werden. Dieses Bedrucken kann ein oder mehrfarbig erfolgen und bietet den Vorteil, auch farbig, bzw. mehrfarbig hinterleuchtete Formteile auf einfache Weise herstellen zu können.

Gegenstand der vorliegenden Erfindung ist daher auch ein Verfahren zur Herstellung einer einseitig ganz oder teilweise metallisierten gegebenenfalls verformten Kunststoff-Folie mit einer Transmission im sichtbaren Wellenlängenbereich von mehr als 50 %, bevorzugt von mehr als 70 %, besonders bevorzugt von mehr als 80 % in den gegebenenfalls nicht metallisierten Bereichen, dadurch gekennzeichnet, dass
A) eine gegebenenfalls verformte Kunststoff-Folie enthaltend wenigstens eine Schicht B enthaltend wenigstens ein Vinylpolymerisat und wenigstens eine Schicht A enthaltend wenigstens ein Polycarbonat coextrudiert wird, wobei die Schicht(en) B eine Schichtdicke von insgesamt 100 µm oder weniger und eine Oberflächenrauhigkeit (R3z-Wert) gemessen nach DIN EN ISO 4288 von weniger als 1 µm und die Kunststoff-Folie eine Gesamtschichtdicke von 1000 µm oder weniger aufweist, und
B) die gemäß Verfahrensschritt A) erhaltene Kunststoff-Folie auf der Seite der Schicht B mittels Galvanisieren metallisiert wird.

Bevorzugt wird dabei die gemäß Verfahrensschritt A) erhaltene Kunststoff-Folie auf der Seite der Schicht B in Schritt B) mittels Galvanisieren nur teilflächig metallisiert.

Weiterhin Gegenstand der vorliegenden Erfindung ist ein Verfahren zur Herstellung von metallisierten, bevorzugt teilweise metallisierten Kunststoffformteilen, dadurch gekennzeichnet, dass
a) eine Kunststoff-Folie enthaltend wenigstens eine Schicht B enthaltend wenigstens ein Vinylpolymerisat und wenigstens eine Schicht A enthaltend wenigstens ein Polycarbonat coextrudiert wird, wobei die Schicht(en) Beine Schichtdicke von insgesamt 100 µm oder weniger und eine Oberflächenrauhigkeit (R3z-Wert) gemessen nach DIN EN ISO 4288 von weniger als 1 µm und die Kunststoff-Folie eine Gesamtschichtdicke von 1000 µm oder weniger und eine Transmission im sichtbaren Wellenlängenbereich von mehr als 50 %, bevorzugt von mehr als 70 %, besonders bevorzugt von mehr als 80 % aufweist,
b) die gemäß Verfahrensschritt a) erhaltene Kunststoff-Folie gegebenenfalls auf der Seite, welche die Schicht A aufweist, bedruckt wird,
c) die gemäß Verfahrensschritt a) oder b) erhaltene Kunststoff-Folie gegebenenfalls verformt wird,
d) die gemäß Verfahrensschritt c) erhaltene Kunststoff-Folie nach dem Verformen auf der Seite, welche die Schicht A aufweist, bzw. auf der bedruckten Seite mit einem thermoplastischen Kunststoff, bevorzugt mit einem nicht galvanisierbaren thermoplastischen Kunststoff hinterspritzt wird, und
e) das gemäß Verfahrensschritt d) erhaltene Kunststoffformteil nach dem Hinterspritzen auf der Seite der Schicht B mittels Galvanisieren metallisiert, bevorzugt teilflächig metallisiert wird.

Das Bedrucken der Kunststoff-Folie auf der Seite, welche die Schicht A aufweist, kann mit allen Druckfarben erfolgen, die den nachfolgenden Verfahrensschritten des Verformens und Hinterspritzens mit thermoplastischen Kunststoffen standhalten. Bevorzugt sind dies solche Druckfarben auf Polyacrylat- und/oder Polycarbonatbasis. Solche Druckfarben sind dem Fachmann bekannt und beispielsweise in WO-A 2009/138217 beschrieben.

Bevorzugt wird der Verfahrensschritt c) im Anschluss an Verfahrensschritt a) oder b) durchgeführt.

Die Prozessschritte des Verformens von Kunststoff-Folien sowie Hinterspritzen mit thermoplastischen Kunststoffen sind dem Fachmann bekannt.

Ein bevorzugtes Verfahren zum Verformen von Kunststoff-Folien ist das sogenannte Hockdruckverformen (High-Pressure-Forming, HPF-Verfahren), welches dem Fachmann bekannt und beispielsweise in WO-A 2009-043539 und EP-A 371 425 beschrieben ist.

Als geeignete thermoplastische Kunststoffe zum Hinterspritzen kommen grundsätzlich alle gebräuchlichen Spritzgutmaterialien in Frage, wie z.B. Polyester, Polycarbonate, Polycarbonat-Blends, Polystyrol, ABS, ABS-Blends, Polyamid, PVC und PMMA. Bevorzugtes Material zum Hinterspritzen ist Polycarbonat oder verschiedene Polycarbonat-Blends. Polycarbonate oder Polycarbonat-Blends bieten erfindungsgemäß den Vorteil guter Lichttransmission und ausgezeichneter Haftung auf der Schicht A der erfindungsgemäßen Folie. Zudem eignen sich Polycarbonate oder Polycarbonat-Blends insbesondere zum Hinterspritzen der erfindungsgemäßen Folie, da eine galvanische Abscheidung von Metallen auf ihnen nicht möglich ist, so dass auch im Falle der Galvanisierung der fertigen Kunststoffformteils eine teil- oder vollflächige Abdeckung der Rückseite und folglich das nachträgliche Entfernen einer solchen Abdeckung nicht erforderlich ist.

Für die Metallisierung kommen alle galvanisch abscheidbaren Metalle in Betracht. Beispielsweise und bevorzugt können dies Chrom, Gold, Cadmium, Kupfer, Messing, Nickel, Silber, Zink oder Zinn sein. Es können auch Kombinationen von mehreren Metallüberzügen dieser Metalle aufgebracht werden. Besonders bevorzugte Metalle sind Kupfer, Nickel und Chrom. Ganz besonders bevorzugt ist Chrom, insbesondere für Hochglanzchrom- und Mattchrombeschichtungen.

Das Metallisieren von Kunststoffoberflächen mittels Galvanisieren ist dem Fachmann bekannt (vgl. z.B. DE 102 08 674 A1). Die einzelnen Prozessschritte hierzu werden im Folgenden beispielhaft beschrieben.

Die zu galvanisierenden Kunststoffformkörper (Folie oder Formteil) werden zunächst auf eine Halterung - in der Regel ein sogenanntes Galvanogestell - gesteckt und kontaktiert. Die Kontaktierung erfolgt dabei vorzugsweise derart, dass die Kontaktgeräte im Falle der partiellen Galvanisierung nicht im Bereich der später metallfrei und lichtdurchlässig, d.h. sichtbaren Oberflächen erfolgt.

Zur Galvanisierung von Kunststoff-Folien oder Kunststoff-Formteilen ist es bekanntermaßen erforderlich, den Kunststoff einer geeigneten Vorbehandlung zu unterziehen, indem die zu metallisierenden Oberflächenbereiche für eine anschließende elektrolytische Beschichtung mit einer gut haftenden, elektrisch leitfähigen Schicht überzogen werden. Dies kann mittels diverser Verfahren erfolgen, wie z.B. Physikalischer Gasphasenabscheidung (PVD), Plasma Enhanced Chemical Vapour Deposition (PECVD), thermisches Spritzen, chemische Ätzverfahren oder Plasmabeschichtung.

Insbesondere zur Vorbereitung von galvanisierbaren Vinylpolymeren auf Basis von Acrylnitril-Butadien-Styrol-Copolymerisat (ABS), kann die Vorbereitung mittels bekannter Verfahren wie z.B. kolloidalen Verfahren oder Direktmetallisierung erfolgen. Beim kolloidalen Verfahren erfolgt vorzugsweise die Abfolge der Verfahrensschritte Beizen, Aktivieren, Beschleunigen, chemisch Vernickeln oder Verkupfern und bei der Direktmetallisierung durch Beizen, Aktivieren, Vernetzen und Aufbringen einer dünnen Metallschicht, wodurch in beiden Fällen eine dünne, vorzugsweise nur bis zu wenigen µm dünne Metallschicht aufgebracht wird. Dabei können Nickelschichten mit Schichtdicken von weniger als 1 µm und Kupferschichten von weniger als 3 µm aufgebracht werden. Auch andere Metallschichten sind möglich.

Die Vorbereitung von ABS-basierten Vinylpolymerisaten mittels kolloidalem Verfahren erfolgt beispielsweise durch Aufrauen der Oberfläche, z.B. in einer Chrom/Schwefelsäurebeize (400 g/l CrO₃ und 400 g/l H₂SO₄), wobei vorzugsweise die Arbeitstemperatur bei ABS 60°C und ABS/PC-Blends 69°C beträgt, wird ein Bestandteil des ABS, das Butadien, aus der Oberfläche aufoxidiert, und es entstehen Kavernen im mikroskopischen Bereich. In diese Kavernen werden Palladiumkeime welche von einer Zinnhülle umgeben sind und ein Kolloid bilden in dem sogenannten Aktivator eingelagert. In einem weiteren Schritt wird die Zinnhülle, welche für die Haftung des Keims in den Kavernen sorgt, im Beschleuniger (Tetrafluorborsäure 17 g/l) bei einer Temperatur von vorzugsweise 45 bis 50 °C soweit entfernt, dass der Keim freiliegt. Das hohe Standardpotenzial des Palladiums sorgt im anschließenden Schritt, der chemischen (außenstromlosen) Vernicklung im Nickelbad (Nickelsulfat; Ammoniak und Natriumhypophosphit als Elektronenlieferant) für den Start der Reaktion. Hier gibt ein Reduktionsmittel, welches selbst oxidiert wird, die zur Nickelabscheidung notwendigen Elektronen ab. So entsteht die erste dünne, leitfähige Nickelschicht, welche durch das Auffüllen der Kavernen eine starke mechanische Verzahnung zum Kunststoff aufweist und entsprechend gut haftet.

Die so aufgebrachten dünnen Metallschichten oder mit anderen Verfahren erzeugten dünnen leitfähigen Schichten bilden dann die Grundlage für das galvanische Abscheiden der weiteren Metallschicht(en). Die galvanische Metallabscheidung erfolgt dabei ausschließlich in den Bereichen, die eine dünne leitfähige Schicht, wie z.B. die vorangehend beschriebene dünne Metallschicht aufweisen.

Im Falle des partiellen Galvanisierens bestehen mehrere Möglichkeiten, die galvanische Metallabscheidung gezielt in bestimmten Bereichen zu verhindern, beispielsweise um diese nachträglich hinterleuchten zu können.

Es besteht beispielsweise die Möglichkeit gezielt partiell die Schicht B zu entfernen. Dies kann beispielsweise durch geeignete Laserverfahren erfolgen. Es besteht weiterhin die Möglichkeit, gezielt Bereiche der Schicht B mit einem nicht leitfähigen und auch nicht galvanisierbaren transparenten Beschichtung, bevorzugt in Form eines Schutzlackes zu beschichten, der vorzugsweise auch nach dem Galvanisieren auf der Kunststoffoberfläche verbleibt. Beide Varianten kämen vor der Vorbereitung der Schicht B für die Galvanisierung zum Einsatz.

Es besteht weiterhin die Möglichkeit, die zur Vorbereitung der Galvanisierung aufgebrachten dünnen leitfähigen Schichten, wie z.B. die dünnen Metallschichten, gezielt partiell zu entfernen. Dies kann beispielsweise mittels Laserablation oder mittels Ätzverfahren erfolgen, wobei mittels Laserablation präzisere Bereiche von den leitfähigen Schichten befreit werden können. Solche und weitere Verfahren sind bekannt und beispielsweise in DE 102 08 674 A1 beschrieben.

Bevorzugt wird daher die Kunststoff-Folie oder das Kunststoffformteil vor dem teilflächigen Galvanisieren derart vorbehandelt, dass
- auf der Seite der Schicht B chemisch oder galvanisch eine dünne Metallschicht aufgebracht wird und diese dünne Metallschicht anschließend partiell abgetragen wird, oder
- die Schicht B teilweise entfernt wird, oder
- die Schicht B teilweise mit einer nicht galvanisierbaren transparenten Beschichtung, vorzugsweise in Form eines Lackes beschichtet wird.

Die folgenden Beispiele dienen der beispielhaften Erläuterung der Erfindung.

### Beispiele

Für die Beispiele wurden die folgenden Materialien verwendet:
Polycarbonat Typ Makrolon^{®} 3108 der Firma Bayer MaterialScience AG (hochviskoses Bisphenol-A-Polycarbonat (Meltflowrate (MFR) 6,5 g/10 min nach ISO 1133 bei 300°C und 1,2 kg) ohne UV-Stabilisierung) für die Herstellung der Polycarbonat enthaltenden Schicht in den Beispielen 1 bis 3
Acrylnitril-Butadiene-Styrol (ABS)-Copolymer Typ Novodur^{®} P2HE der Firma Lanxess Deutschland GmbH (MFR von 7 g/10 min nach ISO 1133 bei 220°C und 10 kg) für die Herstellung der Vinylpolymerisat enthaltenden Schicht in den Beispielen 1 bis 3 sowie die Herstellung der ABS-Platte in Beispiel 4
Polycarbonat/ABS-Blend Typ Bayblend^{®} T 65 der Firma Bayer MaterialScience AG (MFR 11 g/10 min nach ISO 1133 bei 260°C und 5 kg) für die Herstellung der Folie in Beispiel 5.

### Beispiel 1 (erfindungsgemäß): Herstellung einer Coextrusionsfolie

Die verwendete Anlage zur Herstellung der coextrudierten Folie(n) umfasst:
▪ einen Extruder zur Extrusion der Schicht enthaltend wenigstens ein Polycarbonat mit einer Schnecke von 60 mm Durchmesser (D) und einer Länge von 33 D. Die Schnecke weist eine Entgasungszone auf;
▪ einen Coextruder zum Aufbringen der Schicht enthaltend wenigstens ein Vinylpolymerisat mit einer Schnecke der Länge 30 D und einem Durchmesser von 30 mm
▪ eine Schmelzepumpe;
▪ einem Umlenkkopf;
▪ eine spezielle Coextrusions-Breitschlitzdüse mit 450 mm Breite;
▪ einen Dreiwalzen-Glättkalander mit horizontaler Walzenanordnung, wobei die dritte Walze um +/- 45° gegenüber der Horizontalen schwenkbar ist;
▪ eine Rollenbahn;
▪ Dickenmessung
▪ eine Einrichtung zum beidseitigen Aufbringen von Schutzfolie;
▪ einer Abzugseinrichtung;
▪ eine Aufwickelstation.

Das Granulat des Basismaterials Makrolon^{®} 3108 wurde dem Fülltrichter des Extruders und das Granulat des Novodur^{®} P2HE wurde dem Fülltrichter des Coextruders zugeführt. Im jeweiligen Plastifiziersystem Zylinder/Schnecke des Extruders bzw. Coextruders erfolgte das Aufschmelzen und Fördern des Materials. Beide Materialschmelzen wurden in der Coextrusionsdüse zusammengeführt. Von der Düse gelangte die Schmelze auf den Glättkalander, dessen Walzen die in der Tab. 3 genannte Temperatur aufwiesen. Auf dem Glättkalander (bestehend aus drei Walzen) erfolgte die endgültige Formgebung und Abkühlung der Folie. Zur Strukturierung der Folienoberflächen wurden dabei wahlweise eine Gummi-Walze (4-er oder Oberfläche), polierte Chrom-Walze (1-er Oberfläche) oder strukturierte Stahlwalze (2-er und 6-er Oberfläche) eingesetzt. Die für die Strukturierung der Folienoberfläche verwendete Gummi-Walze ist in US-4 368 240 der Fa. Nauta Roll Corporation offenbart.

Für die Coextrusionsfolie wurden zwei Chrom-Walzen im Glättkalander eingesetzt, um beidseitig hochglänzende Folienoberflächen zu erzeugen. Es wurden folgende Verfahrensparameter gewählt:

**Tab. 1:**

| | |
|---|---|
| Temperatur des Hauptextruders | 308 °C +/- 5°C |
| Temperatur des Coextruders | 266 °C +/-5°C |
| Temperatur des Umlenkkopfes | 285 °C +/-5°C |
| Temperatur der Düse | 300 °C +/-5°C |
| Drehzahl des Hauptextruders | 39 min⁻¹ |
| Drehzahl des Coextruders | 38 min⁻¹ |
| Temperatur der Walze 1 | 110°C |
| Temperatur der Walze 2 | 85°C |
| Temperatur der Walze 3 | 115 °C |
| Abzugsgeschwindigkeit | 9,4 m/min |

Es wurde eine transparente, beidseitig glänzende Coextrusionsfolie mit einer Gesamtschichtdicke von 260 µm und einer Schichtdicke der coextrudierten ABS-Copolymer-Schicht von 25 µm erhalten. Die optischen Eigenschaften der Folie werden in Beispiel 6 beschrieben.

### Beispiel 2 (erfindungsgemäß): Herstellung einer Coextrusionsfolie

Auf der Coextrusionsanlage gemäß Beispiel 1 wurde aus Makrolon^{®} 3108 und Novodur^{®} P2HE unter den folgenden Bedingungen die Folie coextrudiert:

**Tab. 2:**

| | |
|---|---|
| Temperatur des Hauptextruders | 312 °C +/- 5°C |
| Temperatur des Coextruders | 266 °C +/-5°C |
| Temperatur des Umlenkkopfes | 290 °C +/-5°C |
| Temperatur der Düse | 300 °C +/-5°C |
| Drehzahl des Hauptextruders | 72 min⁻¹ |
| Drehzahl des Coextruders | 38 min⁻¹ |
| Temperatur der Walze 1 | 110°C |
| Temperatur der Walze 2 | 85°C |
| Temperatur der Walze 3 | 115 °C |
| Abzugsgeschwindigkeit | 9,4 m/min |

Es wurde eine transparente, beidseitig glänzende Coextrusionsfolie mit einer Gesamtschichtdicke von 380 µm und einer Schichtdicke der coextrudierten ABS-Copolymer-Schicht von 25 µm erhalten. Die optischen Eigenschaften der Folie werden in Beispiel 6 beschrieben.

### Beispiel 3 (erfindungsgemäß): Herstellung einer Coextrusionsfolie

Anlage zur Herstellung der coextrudierten Folie(n) umfasst
▪ einen Extruder zur Extrusion der Schicht enthaltend wenigstens ein Polycarbonat mit einer Schnecke von 105 mm Durchmesser (D) und einer Länge von 41 D. Die Schnecke weist eine Entgasungszone auf;
▪ einen Coextruder zum Aufbringen der Schicht enthaltend wenigstens ein Vinylpolymerisat mit einer Schnecke der Länge 44 D und einem Durchmesser von 35 mm
▪ einen Umlenkkopf;
▪ eine speziellen Coextrusions-Breitschlitzdüse mit 1500 mm Breite;
▪ einen Dreiwalzen-Glättkalander mit horizontaler Walzenanordnung, wobei die dritte Walze um +/- 45° gegenüber der Horizontalen schwenkbar ist;
▪ eine Rollenbahn;
▪ Dickenmessung;
▪ eine Einrichtung zum beidseitigen Aufbringen von Schutzfolie;
▪ eine Abzugseinrichtung;
▪ eine Aufwickelstation.

Das Granulat des Basismaterials Makrolon^{®} 3108 wurde dem Fülltrichter des Extruders und das Granulat des Novodur^{®} P2HE wurde dem Fülltrichter des Coextruders zugeführt. Im jeweiligen Plastifiziersystem Zylinder/Schnecke des Extruders bzw. Coextruders erfolgte das Aufschmelzen und Fördern des jeweiligen Materials. Beide Materialschmelzen wurden in der Coextrusionsdüse zusammengeführt. Von der Düse gelangte die Schmelze auf den Glättkalander, dessen Walzen die in der Tab. 3 genannte Temperatur aufwiesen. Auf dem Glättkalander erfolgte die endgültige Formgebung und Abkühlung des Materials. Zur Glättung der Oberflächen wurden polierte Chrom-Walzen eingesetzt. Anschließend wurde die Folie durch einen Abzug transportiert, es wurde die Schutzfolie beidseitig aufgebracht, danach erfolgte die Aufwicklung der Folie.

Für die Coextrusionsfolie wurden zwei Chrom-Walzen im Glättkalander eingesetzt, um beidseitig hochglänzende Folienoberflächen zu erzeugen. Es wurden folgende Verfahrensparameter gewählt:

**Tab. 3:**

| | |
|---|---|
| Temperatur des Hauptextruders | 270°C +/- 5°C |
| Temperatur des Coextruders | 234°C +/-5°C |
| Temperatur des Umlenkkopfes | 275°C +/-5°C |
| Temperatur der Düse | 280°C +/-5°C |
| Drehzahl des Hauptextruders | 54 min⁻¹ |
| Drehzahl der Schmelzepumpe | 25 min⁻¹ |
| Drehzahl des Coextruders | 14 min⁻¹ |
| Drehzahl der Schmelzepumpe | 7 min⁻¹ |
| Temperatur der Walze 1 | 80 °C |
| Temperatur der Walze 2 | 120 °C |
| Temperatur der Walze 3 | 111 °C |
| Abzugsgeschwindigkeit | 12 m/min |

Es wurde eine 1310 mm breite transparente, beidseitig glänzende Coextrusionsfolie mit einer Gesamtschichtdicke von 375 µm und einer Schichtdicke der coextrudierten ABS-Copolymer-Schicht von 25 µm erhalten. Die optischen Eigenschaften der Folie werden in Beispiel 6 beschrieben.

### Beispiel 4 (nicht erfindungs gemäß): Herstellung einer nicht erfindungsgemäßen ABS-Kunststoffplatte

Auf einer kommerziell erhältlichen Spritzgußmaschine wurde aus Novodur^{®} P2HE eine 2,4 mm dicke Platte hergestellt.

Die optischen Eigenschaften der Platte werden in Beispiel 6 beschrieben.

### Beispiel 5 (nicht erfindungsgemäß): Herstellung einer nicht erfindungsgemäßen einschichtigen Kunststofffolie aus einem Polycarbonat/ABS-Blend

Aus Bayblend^{®} T 65 wurde eine beidseitig glänzende 375 µm dicke Folie extrudiert.

Die optischen Eigenschaften der Folie werden in Beispiel 6 beschrieben.

### Beispiel 6: Optische Eigenschaften und Galvanisierungseigenschaften

Zur Bestimmung der Transmission im sichtbaren Wellenlängenbereich (Lichttransmission (Ty (C2°)) (nach ASTM D 1003) wurde ein UltraScan PRO der Fa. Hunter Associates Laboratory, Inc. verwendet. Für die Haze-Bestimmung (nach ASTM D 1003) wurde ein Hazegard Plus der Fa. Byk-Gardner verwendet.

### Die ermittelten Ergebnisse sind in Tab. 4 zusammen gestellt.

**Tab. 4:**

| | **Lichttransmission [%]** | **Haze [%]** |
|---|---|---|
| Folie aus Beispiel 1 | 87,9 | 5,0 |
| Folie aus Beispiel 2 | 87,7 | 5,8 |
| Folie aus Beispiel 3 | 86,5 | 12,3 |
| Platte aus Beispiel 4 (nicht erfindungsgemäß) | 65,5 | 15,1 |
| Folie aus Beispiel 5 (nicht erfindungsgemäß) | 68,5 | 13,2 |

Aus den optischen Messungen ist erkennbar, dass nur die Folien aus den Beispielen 1 bis 3 eine hohe Lichttransmission aufweisen. Das ist die Voraussetzung, damit die Folien nach Galvanisierung und Freilegung der nicht mit Metall bedeckten Bereiche insbesondere auch mit einer energiesparenden Lichtquelle durchstrahlt werden können. Die gute Durchstrahlung auch mit energiesparenden Lichtquellen wird durch den niedrigen Haze der Folien zudem noch begünstigt.

Zudem lassen sich die Folien mittels Galvanisierung auf der Seite der ABS-Schicht metallisieren. Diese Metallisierung kann ohne entsprechende Abdeckung oder Maskierung der anderen Seite selektiv auf der Seite der ABS-Schicht erfolgen, wohingegen die Platte aus Beispiel 4 und die Folie aus Beispiel 5 ohne einen entsprechenden Schutz, z.B. in Form einer Maskierung, beidseitig metallisiert würden.

## Patentansprüche

1. Verwendung einer Kunststoff-Folie enthaltend
- wenigstens eine Schicht A enthaltend wenigstens ein Polycarbonat und
- wenigstens eine Schicht B enthaltend wenigstens ein Vinylpolymerisat
**dadurch gekennzeichnet, dass** die Schicht(en) A enthaltend Polycarbonat und die Schicht(en) B enthaltend wenigstens ein Vinylpolymerisat coextrudiert wurden und die Schicht B enthaltend wenigstens ein Vinylpolymerisat eine Schichtdicke von 100 µm oder weniger und eine Oberflächenrauhigkeit (R3z-Wert) gemessen nach DIN EN ISO 4288 von weniger als 1 µm aufweist und die Kunststoff-Folie eine Transmission im sichtbaren Wellenlängenbereich von mehr als 50 % aufweist und die Gesamtdicke der Kunststoff-Folie 1000 µm oder weniger beträgt,
für die Herstellung metallisierter Bauteile.

2. Verwendung gemäß Anspruch 1, **dadurch gekennzeichnet, dass** die Schicht B als wenigstens einem Vinylpolymerisat ein Acrylnitril-Butadien-Styrol-Copolymerisat (ABS) enthält.

3. Verwendung gemäß Anspruch 1 oder 2, **dadurch gekennzeichnet, dass** die Kunststoff-Folie eine Transmission im sichtbaren Wellenlängenbereich von mehr als 70 %, bevorzugt von mehr als 80 % aufweist.

4. Verwendung gemäß wenigstens einem der Ansprüche 1 bis 3, **dadurch gekennzeichnet, dass** die Schicht(en) B insgesamt eine Schichtdicke von 70 µm oder weniger, bevorzugt von 50 µm oder weniger, besonders bevorzugt von 20 µm oder weniger aufweist bzw. aufweisen.

5. Verwendung gemäß wenigstens einem der Ansprüche 1 bis 4, **dadurch gekennzeichnet, dass** die Gesamtdicke der Kunststoff-Folie 750 µm oder weniger beträgt.

6. Verwendung gemäß wenigstens einem der Ansprüche 1 bis 5, **dadurch gekennzeichnet, dass** die Metallisierung mittels partieller Galvanisierung erfolgt.

7. Verwendung gemäß wenigstens einem der Ansprüche 1 bis 6, **dadurch gekennzeichnet, dass** die Kunststoff-Folie zur Metallisierung von Kunststoffformteilen, bevorzugt von hinterleuchtbaren Kunststoffformteilen verwendet wird.

8. Verwendung gemäß Anspruch 7, **dadurch gekennzeichnet, dass** es sich um Kunststoffformteile für den Automobil-Innenbereich, Flugzeug-Innenbereich, Schienenfahrzeug-Innenbereich, Haushaltsbereich, Computerbereich sowie Elektronikbereich handelt.

9. Verfahren zur Herstellung einer einseitig ganz oder teilweise metallisierten gegebenenfalls verformten Kunststoff-Folie mit einer Transmission im sichtbaren Wellenlängenbereich von mehr als 50 % in den gegebenenfalls nicht metallisierten Bereichen, **dadurch gekennzeichnet, dass**
A) eine gegebenenfalls verformte Kunststoff-Folie enthaltend wenigstens eine Schicht B enthaltend wenigstens ein Vinylpolymerisat und wenigstens eine Schicht A enthaltend wenigstens ein Polycarbonat coextrudiert wird, wobei die Schicht(en) B eine Schichtdicke von insgesamt 100 µm oder weniger und eine Oberflächenrauhigkeit (R3z-Wert) gemessen nach DIN EN ISO 4288 von weniger als 1 µm und die Kunststoff-Folie eine Gesamtschichtdicke von 1000 µm oder weniger aufweist,
B) die gemäß Verfahrensschritt A) erhaltene Kunststoff-Folie auf der Seite der Schicht B mittels Galvanisieren metallisiert wird.

10. Verfahren gemäß Anspruch 9, **dadurch gekennzeichnet, dass** die gemäß Verfahrensschritt A) erhaltene Kunststoff-Folie auf der Seite der Schicht B in Schritt B) mittels Galvanisieren nur teilflächig metallisiert wird.

11. Verfahren gemäß Anspruch 9 oder 10, **dadurch gekennzeichnet, dass** die gemäß Verfahrensschritt A) erhaltene Kunststoff-Folie in den gegebenenfalls nicht metallisierten Bereichen eine Transmission im sichtbaren Wellenlängenbereich von mehr als 70 %, bevorzugt von mehr als 80 % aufweist.

12. Verfahren zur Herstellung von ganz oder teilweise metallisierten Kunststoffformteilen, **dadurch gekennzeichnet, dass**
a) eine Kunststoff-Folie enthaltend wenigstens eine Schicht B enthaltend wenigstens ein Vinylpolymerisat und wenigstens eine Schicht A enthaltend wenigstens ein Polycarbonat coextrudiert wird, wobei die Schicht(en) B eine Schichtdicke von insgesamt 100 µm oder weniger und eine Oberflächenrauhigkeit (R3z-Wert) gemessen nach DIN EN ISO 4288 von weniger als 1 µm und die Kunststoff-Folie eine Gesamtschichtdicke von 1000 µm oder weniger und eine Transmission im sichtbaren Wellenlängenbereich von mehr als 50 % aufweist,
b) die gemäß Verfahrensschritt a) erhaltene Kunststoff-Folie gegebenenfalls auf der Seite, welche die Schicht A aufweist, bedruckt wird,
c) die gemäß Verfahrensschritt a) oder b) erhaltene Kunststoff-Folie gegebenenfalls verformt wird,
d) die gemäß Verfahrensschritt c) erhaltene Kunststoff-Folie nach dem Verformen auf der Seite, welche die Schicht A aufweist, bzw. auf der bedruckten Seite mit einem thermoplastischen Kunststoff, bevorzugt mit einem nicht galvanisierbaren thermoplastischen Kunststoff hinterspritzt wird, und
e) das gemäß Verfahrensschritt d) erhaltene Kunststoffformteil nach dem Hinterspritzen auf der Seite der Schicht B mittels Galvanisieren voll- oder teilflächig metallisiert wird.

13. Verfahren gemäß Anspruch 9 oder 12, **dadurch gekennzeichnet, dass** die Kunststoff-Folie oder das Kunststoffformteil vor dem teilflächigen Galvanisieren derart vorbehandelt wird, dass
- auf der Seite der Schicht B chemisch oder galvanisch eine dünne Metallschicht aufgebracht wird und diese dünne Metallschicht anschließend partiell abgetragen wird, oder
- die Schicht B teilweise entfernt wird, oder
- die Schicht B teilweise mit einer nicht galvanisierbaren Beschichtung beschichtet wird.

## Claims

1. Use of a plastics film comprising
- at least one layer A comprising at least one polycarbonate and
- at least one layer B comprising at least one vinyl polymer,
**characterised in that** the layer(s) A comprising polycarbonate and the layer(s) B comprising at least one vinyl polymer have been coextruded, and the layer B comprising at least one vinyl polymer has a layer thickness of 100 µm or less and a surface roughness (R3z value) measured according to DIN EN ISO 4288 of less than 1 µm and the plastics film has a transmission in the visible wavelength range of more than 50% and the total thickness of the plastics film is 1000 µm or less,
in the production of metallised components.

2. Use according to claim 1, **characterised in that** layer B comprises as at least one vinyl polymer an acrylonitrile-butadiene-styrene copolymer (ABS).

3. Use according to claim 1 or 2, **characterised in that** the plastics film has a transmission in the visible wavelength range of more than 70%, preferably of more than 80%.

4. Use according to at least one of claims 1 to 3, **characterised in that** the layer(s) B has or have a total layer thickness of 70 µm or less, preferably of 50 µm or less, particularly preferably of 20 µm or less.

5. Use according to at least one of claims 1 to 4, **characterised in that** the total thickness of the plastics film is 750 µm or less.

6. Use according to at least one of claims 1 to 5, **characterised in that** the metallisation is carried out by means of partial electroplating.

7. Use according to at least one of claims 1 to 6, **characterised in that** the plastics film is used for the metallisation of plastics mouldings, preferably of backlightable plastics mouldings.

8. Use according to claim 7, **characterised in that** the plastics mouldings are for the automotive interiors sector, the aircraft interiors sector, the railway vehicle interiors sector, the household sector, the computer sector and the electronics sector.

9. Process for the production of an optionally formed plastics film that is wholly or partially metallised on one side and has a transmission in the visible wavelength range of more than 50% in the optionally non-metallised regions, **characterised in that**
A) an optionally formed plastics film comprising at least one layer B comprising at least one vinyl polymer and at least one layer A comprising at least one polycarbonate is coextruded, the layer(s) B having a total layer thickness of 100 µm or less and a surface roughness (R3z value) measured according to DIN EN ISO 4288 of less than 1 µm and the plastics film having a total layer thickness of 1000 µm or less,
B) the plastics film obtained according to process step A) is metallised by means of electroplating on the layer B side.

10. Process according to claim 9, **characterised in that** in step B) the plastics film obtained according to process step A) is only partially metallised by means of electroplating on the layer B side.

11. Process according to claim 9 or 10, **characterised in that** the plastics film obtained according to process step A) has a transmission in the visible wavelength range of more than 70%, preferably of more than 80%, in the optionally non-metallised regions.

12. Process for the production of wholly or partially metallised plastics mouldings, **characterised in that**
a) a plastics film comprising at least one layer B comprising at least one vinyl polymer and at least one layer A comprising at least one polycarbonate is coextruded, the layer(s) B having a total layer thickness of 100 µm or less and a surface roughness (R3z value) measured according to DIN EN ISO 4288 of less than 1 µm and the plastics film having a total layer thickness of 1000 µm or less and a transmission in the visible wavelength range of more than 50%,
b) the plastics film obtained according to process step a) is optionally printed on the side that has layer A,
c) the plastics film obtained according to process step a) or b) is optionally formed,
d) after forming, the plastics film obtained according to process step c) is back moulded on the side that has layer A, or on the printed side, with a thermoplastic plastic, preferably with a non-electroplatable thermoplastic plastic, and
e) after the back moulding, the plastics moulding obtained according to process step d) is wholly or partially metallised on the layer B side by means of electroplating.

13. Process according to claim 9 or 12, **characterised in that** the plastics film or the plastics moulding is pretreated prior to the partial electroplating in such a manner that
- a thin metal layer is applied chemically or by electroplating to the layer B side, and this thin metal layer is then partially removed, or
- layer B is partially removed, or
- layer B is partially coated with a non-electroplatable coating.

## Revendications

1. Utilisation d'une feuille en matériau synthétique, contenant
- au moins une couche A contenant au moins un polycarbonate et
- au moins une couche B contenant au moins un polymère de vinyle
**caractérisée en ce que** la/les couche(s) A contenant du polycarbonate et la/les couche(s) B contenant au moins un polymère de vinyle ont été coextrudées et la couche B contenant au moins un polymère de vinyle présente une épaisseur de couche de 100 µm ou moins et une rugosité de surface (valeur R3z) mesurée selon la norme DIN EN ISO 4288 de moins de 1 µm et la feuille en matériau synthétique présente une transmission dans la plage des longueurs d'onde visibles de plus de 50% et l'épaisseur totale de la feuille en matériau synthétique est de 1000 µm ou moins, pour la fabrication de pièces de construction métallisées.

2. Utilisation selon la revendication 1, **caractérisée en ce que** la couche B contient, en tant qu'au moins un polymère de vinyle, un copolymère d'acrylonitrile-butadiène-styrène (ABS).

3. Utilisation selon la revendication 1 ou 2, **caractérisée en ce que** la feuille en matériau synthétique présente une transmission dans la plage des longueurs d'onde visibles supérieure à 70%, de préférence supérieure à 80%.

4. Utilisation selon au moins l'une quelconque des revendications 1 à 3, **caractérisée en ce que** la/les couche(s) B présente(nt) au total une épaisseur de couche de 70 µm ou moins, de préférence de 50 µm ou moins, de manière particulièrement préférée de 20 µm ou moins.

5. Utilisation selon au moins l'une quelconque des revendications 1 à 4, **caractérisée en ce que** l'épaisseur totale de la feuille en matériau synthétique est de 750 µm ou moins.

6. Utilisation selon au moins l'une quelconque des revendications 1 à 5, **caractérisée en ce que** la métallisation a lieu au moyen d'une galvanisation partielle.

7. Utilisation selon au moins l'une quelconque des revendications 1 à 6, **caractérisée en ce que** la feuille en matériau synthétique est utilisée pour la métallisation de pièces façonnées en matériau synthétique, de préférence de pièces façonnées en matériau synthétique pouvant être éclairées par l'arrière.

8. Utilisation selon la revendication 7, **caractérisée en ce qu'**il s'agit de pièces façonnées en matériau synthétique pour l'intérieur d'automobiles, l'intérieur d'avions, l'intérieur de véhicules ferroviaires, le domaine domestique, le domaine informatique ainsi que le domaine électronique.

9. Procédé pour la fabrication d'une feuille en matériau synthétique pouvant le cas échéant être déformée, totalement ou partiellement métallisée sur une face, présentant une transmission dans la plage des longueurs d'onde visibles de plus de 50% dans les zones le cas échéant non métallisées, **caractérisé en ce que**
A) on coextrude une feuille en matériau synthétique pouvant le cas échéant être déformée, contenant au moins une couche B, contenant au moins un polymère de vinyle, et au moins une couche A, contenant au moins un polycarbonate, la/les couche(s) B présentant une épaisseur de couche d'au total 100 µm ou moins et une rugosité de surface (valeur R3z) mesurée selon la norme DIN EN ISO 4288 de moins de 1 µm et la feuille en matériau synthétique présentant une épaisseur totale de couche de 1000 µm ou moins,
B) la feuille en matériau synthétique obtenue selon l'étape de procédé A) est métallisée par galvanisation sur le côté de la couche B.

10. Procédé selon la revendication 9, **caractérisé en ce que** la feuille en matériau synthétique obtenue selon l'étape de procédé A) n'est métallisée par galvanisation que sur une surface partielle sur le côté de la couche B.

11. Procédé selon la revendication 9 ou 10, **caractérisé en ce que** la feuille en matériau synthétique obtenue selon l'étape de procédé A) présente, dans les zones le cas échéant non métallisées, une transmission dans la plage des longueurs d'onde visibles supérieure à 70%, de préférence supérieure à 80%.

12. Procédé pour la fabrication de pièces façonnées en matériau synthétique, totalement ou partiellement métallisées, **caractérisé en ce que**
a) on coextrude une feuille en matériau synthétique, contenant au moins une couche B, contenant au moins un polymère de vinyle, et au moins une couche A, contenant au moins un polycarbonate, la/les couche(s) B présentant une épaisseur de couche d'au total 100 µm ou moins et une rugosité de surface (valeur R3z) mesurée selon la norme DIN EN ISO 4288 de moins de 1 µm et la feuille en matériau synthétique présentant une épaisseur totale de couche de 1000 µm ou moins et une transmission dans la plage des longueurs d'onde visibles supérieure à 50%,
b) la feuille en matériau synthétique obtenue selon l'étape de procédé a) est le cas échéant imprimée sur le côté qui présente la couche A,
c) la feuille en matériau synthétique obtenue selon l'étape de procédé a) ou b) est le cas échéant déformée,
d) la feuille en matériau synthétique obtenue selon l'étape de procédé c) est contre-injectée, après la déformation, sur le côté qui présente la couche A ou sur la face imprimée, avec un matériau synthétique thermoplastique, de préférence un matériau synthétique thermoplastique non galvanisable et
e) la pièce façonnée en matériau synthétique obtenue selon l'étape de procédé d), après la contre-injection, est métallisée sur toute la surface ou sur une surface partielle, sur le côté de la couche B, par galvanisation.

13. Procédé selon la revendication 9 ou 12, **caractérisé en ce que** la feuille en matériau synthétique ou la pièce façonnée en matériau synthétique est prétraitée avant la galvanisation sur une surface partielle de manière telle que
- une couche métallique mince est appliquée chimiquement ou par galvanisation sur le côté de la couche B et cette couche métallique mince est ensuite partiellement enlevée ou
- la couche B est partiellement éliminée ou
- la couche B est revêtue partiellement par un revêtement non galvanisable.
